**Europäisches Patentamt**

**European Patent Office**

**Office européen des brevets**

(19)

(11) Veröffentlichungsnummer : **0 363 721 B1**

(12) # EUROPÄISCHE PATENTSCHRIFT

(45) Veröffentlichungstag der Patentschrift :
**08.04.92 Patentblatt 92/15**

(51) Int. Cl.$^5$ : **B64G 1/50**, F28D 5/00

(21) Anmeldenummer : **89117717.2**

(22) Anmeldetag : **26.09.89**

(54) **Verdampfungswärmetauscher zum Abführen von Wärme aus Raumfahrzeugen.**

(30) Priorität : **13.10.88 DE 3834814**

(43) Veröffentlichungstag der Anmeldung :
**18.04.90 Patentblatt 90/16**

(45) Bekanntmachung des Hinweises auf die
Patenterteilung :
**08.04.92 Patentblatt 92/15**

(84) Benannte Vertragsstaaten :
**FR IT**

(56) Entgegenhaltungen :
**EP-A- 0 242 669**
**DE-A- 3 718 873**
**FR-A- 1 480 628**

(56) Entgegenhaltungen :
**FR-A- 1 539 635**
**US-A- 2 766 597**
**US-A- 3 613 778**
**US-A- 3 749 156**

(73) Patentinhaber : **ERNO Raumfahrttechnik**
**Gesellschaft mit beschränkter Haftung**
**Hünefeldstrasse 1-5**
**W-2800 Bremen 1 (DE)**

(72) Erfinder : **Leidinger, Bernhard, Dr.**
**Am Rövekamp 12**
**W-2805 Stuhr 1 (DE)**

(74) Vertreter : **Schramm, Ewald Werner Josef**
**Messerschmitt-Bölkow-Blohm GmbH**
**Patentabteilung TM43BRE Postfach 10 78 45**
**W-2800 Bremen 1 (DE)**

EP 0 363 721 B1

**Beschreibung**

Die Erfindung bezieht sich auf einen Verdampfungswärmetauscher zum Abführen von Wärme aus Raumfahrzeugen unter schwerelosen Bedingungen, mit einer Verdampfervorrichtung, in der ein von einem Vorratsbehälter über ein Schaltventil zugeführtes Verdampfungsmedium durch Wärmeaufnahme verdampft und ausgestoßen wird.

Zum Kühlen von Raumfahrzeugen ist es neben Radiatorflächen auch bekannt Verdampfungswärmetauscher zu benutzen und die Wärme durch Verdampfen und Ablassen eines zugeführten Verdampfungsmediums abzuführen. Wie in der Patentanmeldung P 37 18 873.9 (unter Artikel 54 (3) EPÜ Fallendes Dokument) erläutert, wird beim Einsatz solcher auch als Verdampfungskühler bezeichneter Einrichtungen angestrebt, die auf Kosten zusätzlicher Nutzlast mitgeführte Kühlflüssigkeit vollständig zu verdampfen, um auf diese Weise einen optimalen Wirkungsgrad für die Wärmeabfuhr zu erhalten.

Das Dokument EP-A-o 242 669 (Dornier) zeigt enen anderen Verdampfungs Wärmetauscher für Raumfahrzeugen.

Bei unter Schwerelosigkeit sowie unterschiedlichen Beschleunigungen eingesetzten Verdampfungskühlern besteht grundsätzlich das Problem das Verdampfungsmedium in hinreichenden Kontakt zur Wanderung des Wärmetauschers zu bringen, da sich nur so eine gute Wärmeabfuhr ergibt. Außerdem sollte im Dampf mitgeführtes oder rekondensiertes flüssiges Verdampfungsmedium vor dem Ausstoßen abgetrennt und dem Verdampfungsprozeß wiederzugeführt werden, da für eine optimale Wärmeabfuhr eine vollständige Verdampfung Voraussetzung ist.

Der Erfindung liegt daher die Aufgabe zugrunde einen Verdampfungswärmetauscher zur Wärmeabfuhr für Raumfahrzeuge gemäß dem Obergriff des Anspruchs 1 zu schaffen, welcher einen guten Wärmekontakt und vollständige Verdampfung des Verdampfungsmediums ermöglicht. Gemäß der Erfindung ist diese Aufgabe dadurch gelöst, daß die Verdampfungsvorrichtung aus einem Rohr mit einer inneren Kapillarstruktur und Außenrippen zur Wärmeaufnahme besteht, und daß ein Rohrende, die Einspeisestelle, mit dem Ausgang des das Verdampfungsmedium zuführenden Schaltventils und das andere Rohrende mit Bohrungen für den Dampfaustritt, einer hydrophoben Abdeckung, die die Bohrungen abdeckt, und einem Dampfabführstutzen versehen ist.

Die erfindungsgemäße Maßnahme führt zu einem Wärmetauscher der aufgrund seines Aufbaus einen guten Wärmekontakt für das Verdampfungsmedium und eine automatische Rückführung des im Dampf mitgeführten oder rekondensierten flüssigen Verdampfungsmediums gewährleistet. Dabei kann die Verdampfungsvorrichtung aus mehreren parallelen Rohren bestehen und die Kapillarstruktur aus dünnen lamellenartigen Rippen, welche in Längsrichtung der Rohre verlaufen und einen für einen für die Kapillarwirkung erforderlichen geringen Abstand zueinander aufweisen. Als Verdampfungsmedium kann entweder Wasser oder Ammoniak benutzt werden.

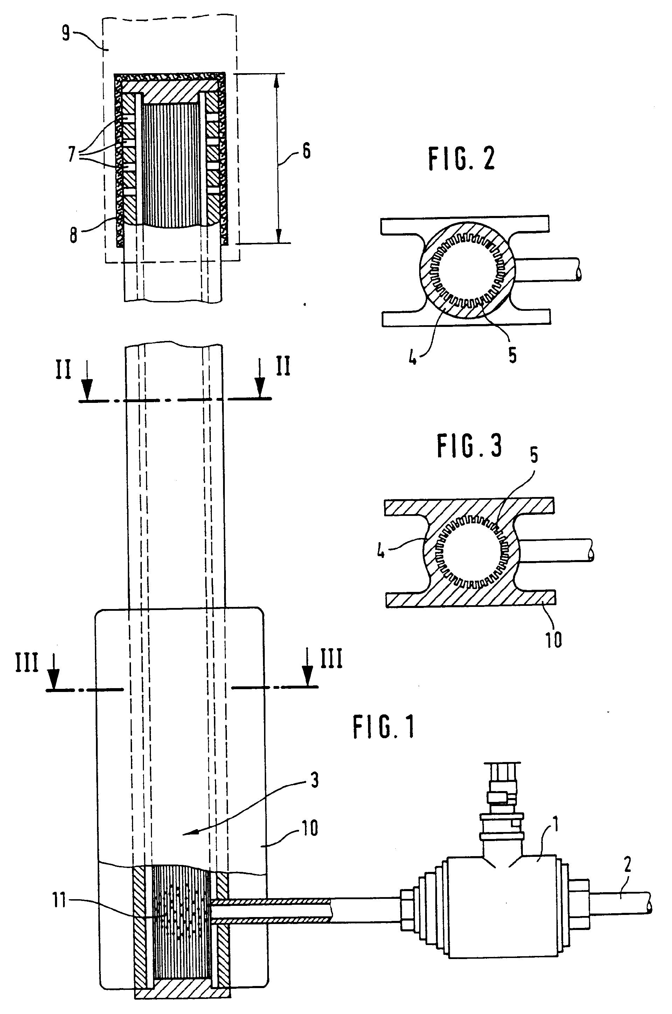

Die Erfindung wird anhand der beiliegenden Zeichnung näher erläutert.

Wie aus der Zeichnung zu erkennen ist, wird das Verdampfungsmedium von einem nicht näher dargestellten Vorratsbehälter über eine im Schaltventil 1 enthaltene Rohrleitung 2 einer Verdampfungsvorrichtung 3 zugeführt. Die Verdampfungsvorrichtung 3 besteht aus einem Rohr 4 mit innerer Kapillarstruktur 5, wobei die Zuführung des Verdampfungsmediums an einem Rohrende des Rohres 4 erfolgt. Das andere Rohrende des über seine gesammte Länge mit der inneren Kapillarstruktur 5 versehenen Rohres 4 ist in einem relativ kurzen Bereich 6 mit Bohrungen 7 für den Dampfaustritt versehen und dieser Bereich 6 ist mit einer hydrophoben Abdeckung 8 versehen. Ein gestrichelt angedeuteter über die aus beschichtetem Gewebe bestehender Abdeckung 8 gestreifter Stutzen 9 dient zum Abführen des ausgestoßenen Dampfes und über am Rohr 4 vorgesehene Außenrippen 10 wird die Wärme der Verdampfungsvorrichtung 3 zugeführt.

Im Einsatz wird der Verdampfungsvorrichtung 3 abzuführende Wärme zugeführt, welche von den Außenrippen 10 aufgenommen und auf das innerhalb des Rohres 4 vorhandene Verdampfungsmedium, z. B. Wasser oder Ammoniak übertragen wird. Das Verdampfungsmedium wird hierzu vom nicht näher dargestellten Vorratsbehälter über die Rohrleitung 2 mit dem Schaltventil 1 zugeführt, wobei die Rohrleitung 2 über die Kapillarstruktur 5 hinaus in das Rohr 4 eingesteckt ist. Die zugeführte Wärme erhitzt und verdampft dann das Verdampfungsmedium, so daß der Dampf zum Dampfaustritt am anderen Ende des Rohres 4 strömt und dort durch die Bohrung 7 austritt. Im Dampf mitgeführtes oder rekondensiertes flüssiges Verdampfungsmedium wird dabei von der hydrophoben Abdeckung 8 zurückgehalten und über die Kapillarstruktur 5 zur im Bereich der Einspeisungsstelle liegenden Verdampferzone aufgrund der Kapillarwirkung zurücktransportiert. Für die hydrophobe Abdeckung kann dabei ein beschichtetes Gewebe benutzt werden. Der ausgetretene Dampf wird dann mit dem Stutzen 9 aufgefangen und zur Wärmeabfuhr aus dem Raumfahrzeug abgelassen. Ein im Bereich der Einspeisestelle vorgesehenes poröses Material 11 sichert dabei die Benetzung der kapillaren Struktur, während eine Druck- und/oder Temperaturmeßeinrichtung mit ihren Daten zur Steuerung des Schaltventils benutzt

2

werden kann.

## Patentansprüche

1. Verdampfungswärmetauscher zum Abführen von Wärme aus Raumfahrzeugen unter schwerelosen Bedingungen, mit einer Verdampfervorrichtung, in der ein von einem Vorratsbehälter über ein Schaltventil zugeführtes Verdampfungsmedium durch Wärmeaufnahme verdampft und ausgestoßen wird, **dadurch gekennzeichnet**, daß die Verdampfervorrichtung (3) aus einem Rohr (4) mit einer inneren Kapillarstruktur (5) und Außenrippen (10)zur Wärmeaufnahme besteht, und daß ein Rohrende, die Einspeisestelle, mit dem Ausgang des Schaltventils (1) und das andere Rohrende mit Bohrungen (7) für den Dampfaustritt, einer hydrophoben Abdeckung, die die Bohrungen abdeckt, (8) und einem Dampfabführstutzen (9) versehen ist.

2. Verdampfungswärmetauscher nach Anspruch 1, **dadurch gekennzeichnet**, daß die Verdampfervorrichtung (3) aus mehreren parallelen Rohren (4) besteht.

3. Verdampfungswärmetauscher nach Anspruch 1 oder 2, **dadurch gekennzeichnet**, daß die Kapillarstruktur (5) aus dünnen lamellenartigen Rippen besteht, die in Längsrichtung der Rohre (4) verlaufen und einen für die Kapillarwirkung erforderlichen geringen Abstand zueinander aufweisen.

4. Verdampfungswärmetauscher nach einem der Ansprüche 1 bis 3, **dadurch gekennzeichnet**, daß für die hydrophobe Abdeckung (8) beschichtetes Gewebe benutzt wird.

5. Verdampfungswärmetauscher nach einem der Ansprüche 1 bis 4, **dadurch gekennzeichnet**, daß für das Verdampfungsmedium Wasser benutzt wird.

6. Verdampfungswärmetauscher nach einem der Ansprüche 1 bis 5, **dadurch gekennzeichnet**, daß für das Verdampfungsmedium Ammoniak benutzt wird.

7. Verdampfungswärmetauscher nach einem der Ansprüche 1 bis 6, **dadurch gekennzeichnet**, daß in der Einspeisestelle ein poröses Material (11) vorgesehen ist, das das flüssige Verdampfungsfluid in die Kapillarstruktur (5) leitet.

8. Verdampfungswärmetauscher nach einem der Ansprüche 1 bis 7, **dadurch gekennzeichnet**, daß die Verdampfervorrichtung (3) eine Druck- und/oder Temperaturmeßeinrichtung aufweist, deren Daten zur Steuerung des Schaltventiles (1) benutzt werden.

## Claims

1. A vaporization heat exchanger for the removal of heat from space vehicles under weightless conditions, having a vaporizer device in which a vaporization medium supplied from a supply container via a switching valve is vaporized by heat absorption and expelled, **characterised in that** the vaporizer device (3) consists of a pipe (4) with an inner capillary structure (5) and outer fins (10) for heat absorption, and that one pipe end, the inlet point, is provided with the outlet of the switching valve (1) and the other pipe end is provided with holes (7) for the outlet of vapour, a hydrophobic cover (8), covering the holes, and a vapour removal connection (9).

2. A vaporization heat exchanger according to claim 1, **characterised in that** the vaporizer device (3) consists of a plurality of parallel pipes (4).

3. A vaporization heat exchanger according to claim 1 or 2, **characterised in that** the capillary structure (5) consists of thin lamella-type ribs which run longitudinally of the pipes (4) and have a small spacing from each other which is required for the capillary action.

4. A vaporization heat exchanger according to any one of claims 1 to 3, **characterised in that** coated fabric is used for the hydrophobic covering (8).

5. A vaporization heat exchanger according to any one of claims 1 to 4, **characterised in that** water is used for the vaporization medium.

6. A vaporization heat exchanger according to any one of claims 1 to 5, **characterised in that** ammonium hydroxide is used for the vaporization medium.

7. A vaporization heat exchanger according to any one of claims 1 to 6, **characterised in that** a porous material (11) is provided in the inlet point, which material conveys the liquid vaporization fluid into the capillary structure (5).

8. A vaporization heat exchanger according to any one of claims 1 to 7, **characterised in that** the vaporizer device (3) has a pressure and/or temperature measuring device, the data from which are used to control the switching valve (1).

## Revendications

1. Echangeur de chaleur par vaporisation pour évacuer de la chaleur d'un engin spatial dans des conditions d'apesanteur, comportant un dispositif de vaporisation qui reçoit un fluide de vaporisation fourni par l'intermédiaire d'une vanne à partir d'un réservoir, ce fluide se vaporisant par apport de chaleur pour être éjecté, échangeur caractérisé en ce que le dispositif de vaporisation (3) se compose d'un tube (4) à structure interne (5) capillaire et des nervures extérieures (10) pour recevoir la chaleur et en ce qu'une extrémité de tube constitue le point d'alimentation, à la sortie de la vanne (1), l'autre extrémité du tube étant munie de perçages (7) pour la sortie de la vapeur, avec un revêtement hydrophobe (8) autour des perçages et un manchon d'évacuation de vapeur (9).

2. Echangeur de chaleur par vaporisation selon la revendication 1, caractérisé en ce que le dispositif de vaporisation (3) se compose de plusieurs tubes (4) parallèles.

3. Echangeur de chaleur par vaporisation selon la revendication 1 ou 2, caractérisé en ce que la structure capillaire (5) se compose de minces nervures en forme de lamelles disposés dans la direction longitudinale du tube (4) et qui sont écartées d'une distance suffisamment faible pour créer un effet capillaire.

4. Echangeur de chaleur par vaporisation selon l'une des revendications 1 à 3, caractérisé en ce que le revêtement hydrophobe (8) est un tissu muni d'un revêtement.

5. Echangeur de chaleur par vaporisation selon l'une des revendications 1 à 4, caractérisé en ce que le fluide à vaporiser est de l'eau.

6. Echangeur de chaleur par vaporisation selon l'une des revendications 1 à 5, caractérisé en ce que le fluide à vaporiser est de l'ammoniac.

7. Echangeur de chaleur à vaporisation selon l'une des revendications 1 à 6, caractérisé en ce que le point d'alimentation est constitué par un matériau poreux (11) qui conduit le fluide à l'état liquide, à vaporiser dans la structure capillaire (5).

8. Echangeur de chaleur à vaporisation selon l'une des revendications 1 à 7, caractérisé en ce que le dispositif de vaporisation (3) comporte un dispositif de mesure de pression et/ou de température dont les données servent à commander la vanne (1).

FIG. 2

FIG. 3

FIG. 1